# EUROPÄISCHE PATENTSCHRIFT

(11) **EP 1 599 685 B1**
(45) Veröffentlichungstag und Bekanntmachung des Hinweises auf die Patenterteilung: **21.06.2006**
(21) Anmeldenummer: 04706667.5
(22) Anmeldetag: 30.01.2004
(51) Int. Cl.: F16H 13/02, F01P 5/12, F02B 67/06

(54) **REIBRADGETRIEBE FÜR EIN VON EINEM AGGREGATE-RIEMENTRIEB EINER BRENNKRAFTMASCHINE GESONDERT ANGEORDNETES NEBENAGGREGAT**
FRICTION GEAR FOR A SEPARATE ACCESSORY GROUP OF A BELT DRIVE FOR AN INTERNAL COMBUSTION ENGINE
ENGRENAGE A ROUE DE FRICTION DESTINE A UN GROUPE AUXILIAIRE SEPARE D'UN ENTRAINEMENT A COURROIE DE GROUPE D'UN MOTEUR A COMBUSTION INTERNE

(30) Priorität: 03.03.2003 DE 10309063
(43) Veröffentlichungstag der Anmeldung: 30.11.2005
(73) Patentinhaber: Bayerische Motoren Werke Aktiengesellschaft, 80809 München (DE)
(72) Erfinder: WIMMER, Rudolf, A-4431 Haidershofen (AT); FÖSSL, Peter, A-4441 Behamberg (AT); LEMBERGER, Heinz, 85774 Unterföhring (DE)
(86) Internationale Anmeldenummer: PCT/EP2004/000847
(87) Internationale Veröffentlichungsnummer: WO 2004/079225

(56) Entgegenhaltungen:
- DE-A- 3 934 884
- DE-C- 19 630 221
- US-A- 5 638 931
- PATENT ABSTRACTS OF JAPAN Bd. 2000, Nr. 12, 3. Januar 2001 (2001-01-03) & JP 2000 257553 A (SEIKO SEIKI CO LTD), 19. September 2000 (2000-09-19)

## Beschreibung

Die Erfindung bezieht sich auf ein Reibradgetriebe für ein von einem Aggregate-Riementrieb gesondert angeordnetes Nebenaggregat, das ein Antriebsrad des Nebenaggregates und ein mit der Außenseite des Riemens sowie mit dem Antriebsrad in reibschlüssige Antriebsverbindung steuerbares Reibrad umfasst, und das Reibrad mittels eines auf einem Exzenter einer maschinenseitig angeordneten Steuereinrichtung gelagerten Schwenkarmes geführt ist. Gattungsbildende Schrift für das vorbeschriebene Reibradgetriebe ist die DE-A-3934884. In der nicht vorveröffentlichten nationalen Patentanmeldung DE 10255075 ist das Exzenter gegen einer Feder-Vorspannung motorisch drehbeweglich antriebbar. Bei Ausfall eines Servomotors bei unterbrochener Antriebsverbindung der Reibpartner das schwenkarmgeführte Reibrad über den Exzenter mittels der Feder-Vorspannung in Eingriff mit Riemen und Antriebsrad gesteuert ist.

Vorgeschlagen ist bei diesem Reibradgetriebe ein schaltbarer Elektromagnet als Servomotor, der den Exzenter über ein Steilgewinde in eine Hub-Drehbewegung versetzt zur Antriebsunterbrechung von Reibrad und Antriebsrad. Mit Abschalten des Elektromagneten ist das Reibrad über den federbeaufschlagten Exzenter in Antriebsverbindung mit dem Antriebsrad des Nebenaggregates gesteuert. Bei einem Ausfall des Servomotors ist über die Anordnung einer den Exzenter über das Steilgewinde rückdrehenden Schraubendrehfeder eine Antriebsverbindung des Reibrades mit dem Antriebsrad sichergestellt und damit eine Failsafe-Funktion erzielt.

Der Erfindung liegt die Aufgabe zugrunde, für das gattungsgemäße Reibradgetriebe einen im Aufbau einfachen und damit kostengünstigen Exzenter-Antrieb der Steuereinrichtung aufzuzeigen ohne Verzicht auf die Failsafe-Funktion.

Diese Aufgabe ist mit dem Patentanspruch 1 dadurch gelöst, dass ein an einem Sockel der Steuereinrichtung zu dieser achsparallel oder querab angeordneter Servomotor über ein in beiden Drehrichtungen ohne Selbsthemmung drehbares Zahnradgetriebe mit dem Exzenter in Antriebsverbindung steht, wobei der Servomotor mit dem Zahnradgetriebe unter Zwischenschaltung einer in Antriebsrichtung drehfest sperrenden Freilaufeinrichtung in Antriebsverbindung steht.

Als Zahnradgetriebe ist für einen aus Einbau- und Montagegründen bevorzugt querab angeordneten Servomotor ein Schneckengetriebe mit einer mehrgängigen, nicht selbsthemmenden Schnecke vorgesehen, wogegen für einen zur Drehachse des Exzenters achsparallel angeordneten Servomotor ein ein- oder mehrfach untersetzendes Stirnradgetriebe oder ein Winkelgetriebe zur Antriebsverbindung mit dem Exzenter dient.

Die Erfindung ist besonders vorteilhaft bei Verwendung von handelsüblichen Kaufteilen für den Exzenter-Antrieb, wobei neben einem hydraulischen oder einem pneumatischen Servomotor insbesondere ein elektrischer Servomotor aufgrund der großen Verfügbarkeit eine kostengünstige Lösung darstellt. Vorteilhaft ist ein elektrischer Schrittschaltmotor eingesetzt, mit dem eine bedarfsgesteuerte Freistellung des Reibrades vom Antriebsrad des Nebenaggregates ohne zusätzliche Einrichtungen sicher erzielt ist.

Weitere konstruktiv vorteilhafte Ausgestaltungen der Erfindung sind in zusätzlichen Ansprüchen angegeben.

Die Erfindung ist anhand von in der Zeichnung dargestellten Ausführungsbeispielen beschrieben. Es zeigt:
Fig.1 ein stirnseitig an einer abschnittsweise gezeigten Brennkraftmaschine mit einem Aggregate-Riementrieb zusammenwirkend angeordnetes Reibradgetriebe für ein vom Riementrieb gesondert angeordnetes Nebenaggregat, insbesondere Kühlmittelpumpe,
Fig.2 eine erfindungsgemäße Steuereinrichtung mit einem das Reibrad tragenden Schwenkarm in Explosionsdarstellung,
Fig.3 einen Schnitt durch den Exzenter quer zum Schneckengetriebe,
Fig.4 einen Schnitt durch den Exzenter parallel zum Servomotor,
Fig.5 einen Servomotor mit einer mit dem Rotor über eine Freilaufeinrichtung verbindbaren Schneckenwelle, und
Fig.6 ein weiteres Reibradgetriebe mit einem achsparallel angeordneten Servomotor.

In einem Riementrieb 1 für nicht gezeigte Aggregate einer nur abschnittsweise dargestellten Brennkraftmaschine 2 ist ein Reibradgetriebe 3 vorgesehen für ein vom Riementrieb 1 gesondert an der Brennkraftmaschine 2 angeordnetes Nebenaggregat 4, das insbesondere eine Kühlmittelpumpe für den Kreislauf der Brennkraftmaschine 2 ist.

Das Reibradgetriebe 3 umfasst ein in einem Umschlingungsbereich des Riemens 5 eines kurbelwellenseitigen Triebrades 6 der Brennkraftmaschine 2 mit der Außenseite 7 des Riemens 5 reibschlüssig zusammenwirkendes Reibrad 8 sowie ein mit dem Reibrad 8 reibschlüssig antreibbares Antriebsrad 9 der Kühlmittelpumpe 4. Das Reibrad 8 ist mittels einer Steuereinrichtung 10 insbesondere bei einem Kaltstart der Brennkraftmaschine 2 außer Eingriff mit dem pumpenseitigen Antriebsrad 9 gesteuert.

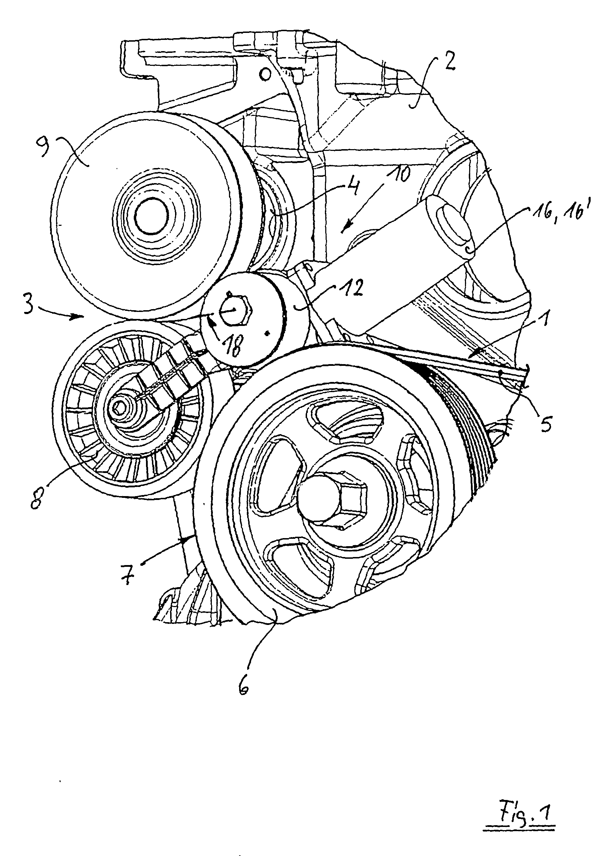

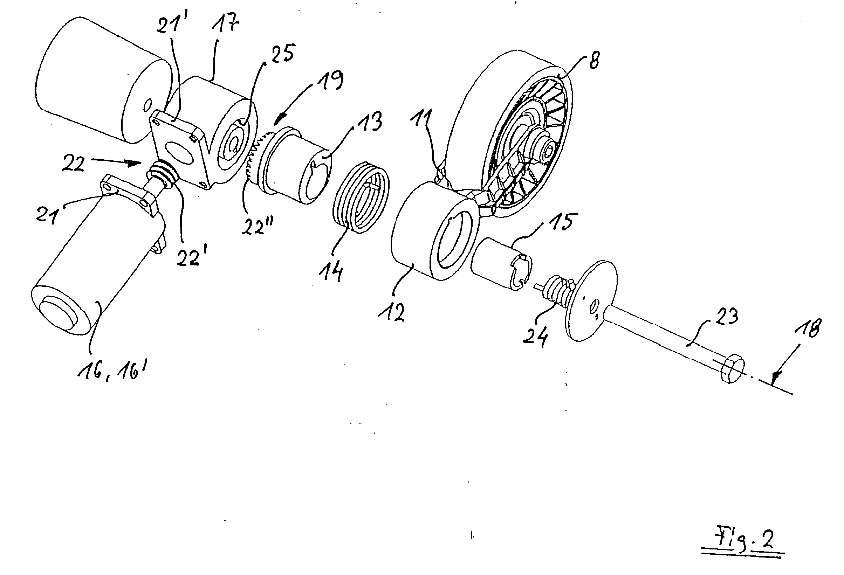

Wie aus den Figuren 1 und 2 ersichtlich, ist das Reibrad 8 mittels eines Schwenkarmes 11 relativ zum Riemen 5 und zum Antriebsrad 9 geführt. Mittels eines Auges 12 ist der Schwenkarm 11 auf einem maschinenseitig drehbeweglich angeordneten Exzenter 13 schwenkbeweglich gelagert. Zwischen dem Außenumfang des Exzenters 13 und dem Innenumfang des Schwenkarm - Auges 12 ist eine Schraubendrehfeder 14 vorgespannt angeordnet, die mit einem Ende am Auge 12, und mit dem anderen Ende am Exzenter 13 abgestützt ist. Mit dieser Federanordnung ist einerseits insbesondere bei außer Eingriff mit dem Antriebsrad 9 gesteuertem Reibrad 8 dieses über den Schwenkarm 11 gegen die Außenseite 7 des Riemens 5 gedrückt und andererseits kann der auf einer maschinenseitig drehfixiert angeordneten Lagerbüchse 15 drehbeweglich gelagerte Exzenter 13 relativ zum Auge 12 derart in eine Drehbewegung versetzt werden, dass das Reibrad 8 über den mit dem Auge 12 verbundenen Schwenkarm 11 in Antriebsverbindung mit dem Riemen 5 und dem Antriebsrad 9 gebracht und gehalten ist.

Eine Unterbrechung der Antriebsverbindung von Reibrad 8 und Antriebsrad 9 ist gesteuert mittels eines Servomotors 16 bewirkt. Bei Ausfall dieses Servomotors 16. während einer unterbrochenen Antriebsverbindung der Reibpartner 8 und 9 dient die vorbeschriebene Federanordnung im Sinne einer Failsafe - Funktion ebenfalls dazu, das Reibrad 8 in Antriebsverbindung mit dem Antriebsrad 9 der Kühlmittelpumpe 4 zu bringen.

Um einen im Aufbau einfachen und damit kostengünstigen Exzenter-Antrieb der Steuereinrichtung 10 des Reibradgetriebes 3 ohne Verzicht auf die Failsafe-Funktion mittels eines Servomotors 16 zu erzielen, ist erfindungsgemäß vorgesehen, dass ein an einem Sockel 17 der Steuereinrichtung 10 zur Drehachse 18 des Exzenters 13 achsparallel oder querab angeordneter Servomotor 16 über ein in beide Drehrichtungen ohne Selbsthemmung drehbares Zahnradgetriebe 19 mit dem Exzenter 13 in Antriebsverbindung steht, wobei der Servomotor 16 mit dem Zahnradgetriebe 19 zur Erzielung der Failsafe-Funktion bei Ausfall des Servomotors 16 unter Zwischenschaltung einer lediglich in Servomotor-Antriebsrichtung drehfest sperrenden Freilaufeinrichtung 20 in Antriebsverbindung steht. Mit der erfindungsgemäßen Antriebsunterbrechung zwischen Servomotor 16 und Exzenter 13 kann dieser unter der Wirkung der Schraubendrehfeder 14 und frei drehbarem Zahnradgetriebe 19 das Reibrad 8 in reibschlüssigen Eingriff mit dem Antriebsrad 9 der Kühlmittelpumpe 4 steuern.

Für einen querab zur Drehachse 18 des Exzenters 13 am Sockel 17 über Flansche 21,21' lösbar angeordneten Servomotor 16 bietet sich als Zahnradgetriebe 19 ein Schneckengetriebe 22 mit einer mehrgängigen, nicht selbsthemmenden Schnecke 22' an zur freien Rückdrehbewegung des Exzenters 13 einschließlich des antriebsverbundenen Schneckengetriebes 22 zur Erzielung der Failsafe-Funktion.

Als Servomotor 16 dient ein Elektromotor, vorzugsweise ein Schrittschaltmotor, mittels dem die Position des vom Antriebsrad 9 getrennten Reibrades 8 durch Aufrechterhaltung der Bestromung einfach und sicher erzielt ist. Um das Reibrad 8 wieder in Antriebsverbindung mit dem Antriebsrad 9 der Kühlmittelpumpe 4 zu bringen, genügt der Wegfall der Bestromung, da über die dem jeweiligen Zahnradgetriebe 19 bzw. Schneckengetriebe 22 zugeordnete Freilaufeinrichtung 20 der Exzenter 13 federbelastet automatisch zurückdreht zur Wiederherstellung der Antriebsverbindung zwischen Reibrad 8 und Antriebsrad 9. Für diesen Vorgang ist somit in vorteilhafter Weise dem Schrittschaltmotor keine elektrische Energie insbesondere aus dem Bordnetz zuzuführen.

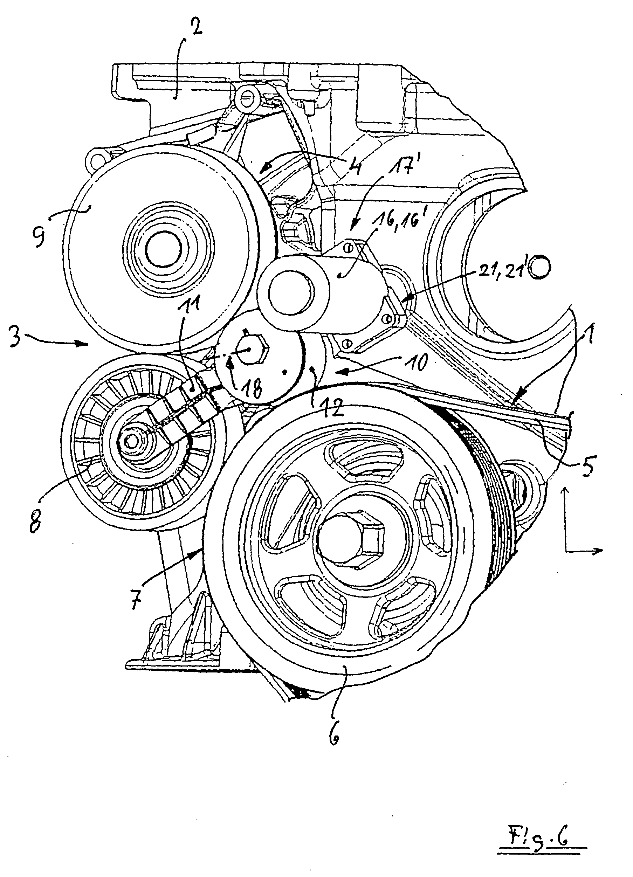

Neben einem elektrischen Schrittschaltmotor ist auch ein hydraulischer oder ein pneumatischer Servomotor 16' vorstellbar. Wie aus Fig.6 ersichtlich, kann der Servomotor 16 oder 16' auch in einer zur Drehachse 18 des Exzenters 13 parallelen Anordnung vorgesehen sein, wobei der Exzenter 13 über ein einfach oder mehrfach untersetzendes, nicht gezeigtes Stirnradgetriebe oder ein nicht dargestelltes Winkelgetriebe unter jeweiliger Zwischenschaltung der Freilaufeinrichtung 20 vom jeweiligen Servomotor 16,16' gesteuert angetrieben ist.

Jedenfalls ist mit jeder der vorgenannten Anordnungen bei entsprechend bemessener Schraubendrehfeder 14 die Failsafe-Funktion dadurch erfüllt, dass bei Ausfall des Servomotors 16,16' bei unterbrochen gesteuerter Antriebsverbindung von Reibrad 8 und Nebenaggregate-Antriebsrad 9 bei vom Servomotor 16, 16' entkuppeltem, frei drehbarem jeweiligem Zahnradgetriebe 19 das Reibrad 8 über den Schwenkarm 11 mittels des federangetriebenen Exzenters 13 in Eingriffsposition mit dem Antriebsrad 9 gezogen ist.

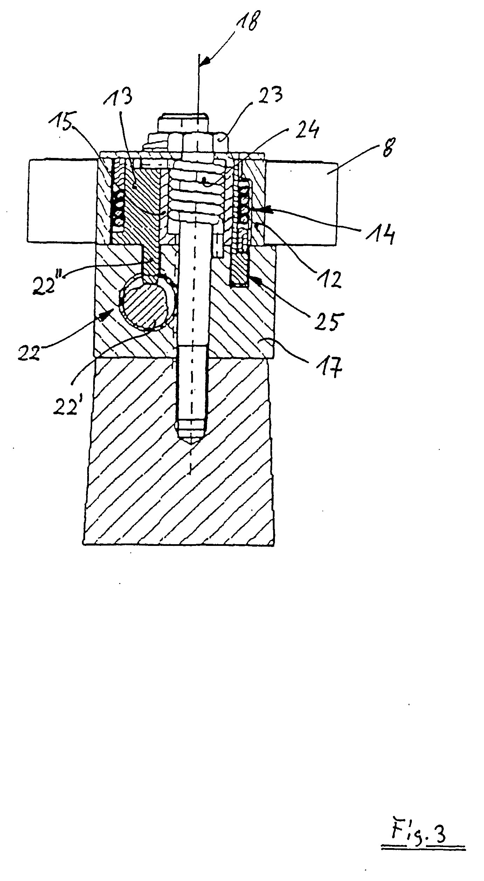

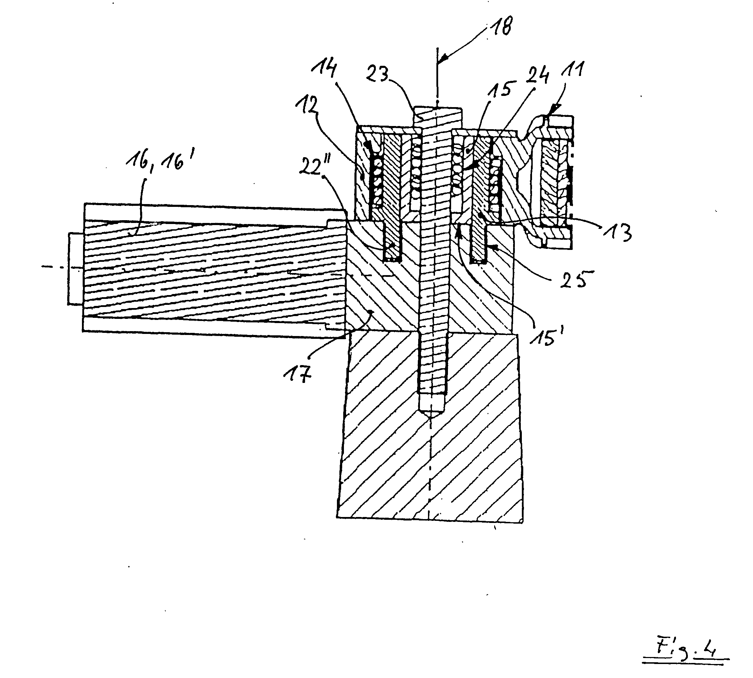

Wie insbesondere aus den Figuren 3 und 4 ersichtlich, ist der Exzenter 13 auf der maschinenseitig drehfixiert angeordneten Lagerbüchse 15 mit stirnseitig am Sockel 17 aufliegenden Boden 15' drehbeweglich gelagert, wobei in der Lagerbüchse 15 koaxial zu einem diese durchsetzenden Haltebolzen 23 der Steuereinrichtung 10 eine weitere Schraubendrehfeder 24 angeordnet ist. Diese Schraubendrehfeder 24 ist zur Absicherung der Failsafe - Funktion der Steuereinrichtung 10 mit der ersten Schraubendrehfeder 14 parallel geschaltet durch eine auf den Exzenter 13 gleichgerichtete Dreheinwirkung. Mit den parallel geschalteten Schraubendrehfedern 14 und 24 sind bei rückdrehendem Exzenter 13 in der Steuereinrichtung 10 und im jeweiligen Zahnradgetriebe 19 auftretende Reibungskräfte sicher überwunden zum einwandfreien Eingriff des Reibrades 8 mit dem Antriebsrad 9 sowohl bei gesteuert veranlasstem als auch bei durch Ausfall des Servomotors 16, 16' automatischem Eingriff.

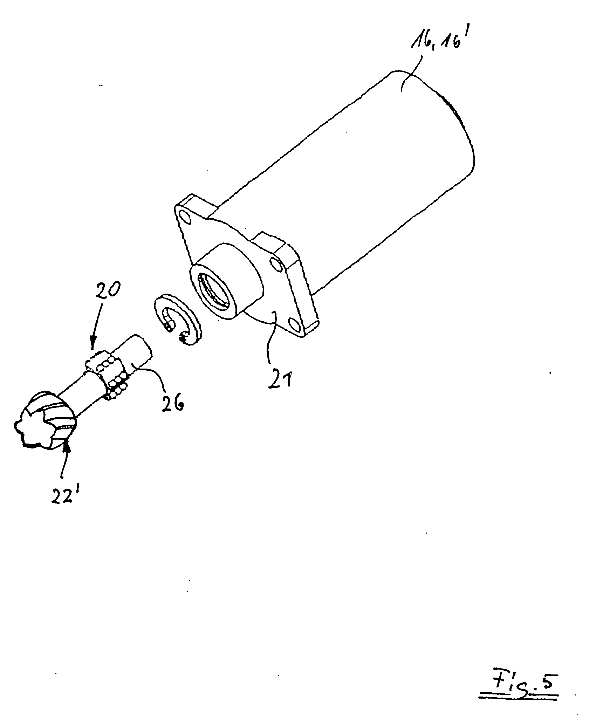

Aus den Figuren 2 mit 4 ist ferner ersichtlich, dass am Exzenter 13 sockelseitig ein in eine Ringnut 25 des Sockels 17 vorspringend angeordneter Schneckenradkranz 22" vorgesehen ist, der mit einer in Figur 5 gezeigten, mehrgängigen Schnecke 22' zusammenwirkt. Diese Schnecke 22' steht unter Zwischenschaltung der auf einer Welle 26 angeordneten Freilaufeinrichtung 20 mit dem nicht gezeigten Rotor des querab am Sockel 17 angeflanscht angeordneten Schrittschaltmotors 16 in Antriebsverbindung.

Bei dem in Figur 6 gezeigten Reibradgetriebe 3 ist ein elektrischer Servomotor 16 oder ein hydraulischer oder pneumatischer Servomotor 16' achsparallel zur Drehachse 18 des nicht erkennbaren Exzenters 13 der Steuereinrichtung 10 an deren Sockel 17' angeordnet. Der Exzenter 13 ist hierbei sockelseitig mit einem Zahnrad ausgerüstet, das mit einem Ritzel eines nicht gezeigten Stirnrad- oder Winkel-Getriebes zusammenwirkt, wobei das Ritzel unter Zwischenschaltung einer Freilaufeinrichtung mit dem Rotor des jeweiligen Servomotors 16, 16' in Antriebsverbindung steht.

Wie bereits dargelegt, ist das Nebenaggregat 4 vorzugsweise eine Kühlmittelpumpe der Brennkraftmaschine 2, wobei das Reibrad 8 des Reibradgetriebes 3 vom Antriebsrad 9 der Kühlmittelpumpe 4 signalgesteuert getrennt ist durch einen Parameter der Brennkraftmaschine 2 oder mittels eines in einem elektronischen Steuergerät abgelegten Kennfeldes. Das Reibrad 8 ist dabei außer Eingriff gehalten mittels eines bestromten Schrittschaltmotors 16 oder mittels eines gegen einen Drehanschlag wirkend angeordneten hydraulischen oder pneumatischen Servomotors 16'.

Gegenüber einer direkt elektrisch angetriebenen Kühlmittelpumpe, bei der durch einen Stromausfall oder einen elektromotorischen Fehler durch fehlenden Kühlmittelumlauf die Brennkraftmaschine gefährdet ist, ist mit der Erfindung in vorteilhafter Weise bei einem Ausfall eines Servomotors der Steuereinrichtung eines Reibradgetriebes mittels eines mechanisch gesteuert automatisierten Reibeingriffes des Reibrades mit dem Kühlmittelpumpen-Antriebsrad der Kühlmittelumlauf in der Brennkraftmaschine sichergestellt.

## Patentansprüche

1. Reibradgetriebe für ein von einem Aggregate-Riementrieb einer Brennkraftmaschine gesondert angeordnetes Nebenaggregat,
- das ein Antriebsrad (9) des Nebenaggregates (4) und ein mit der Außenseite (7) des Riemens (5) sowie mit dem Antriebsrad (9) in reibschlüssige Antriebsverbindung steuerbares Reibrad (8) umfasst,
- und das Reibrad (8) mittels eines auf einem Exzenter (13) einer maschinenseitig angeordneten Steuereinrichtung (10) gelagerten Schwenkarmes (11) geführt ist, **dadurch gekennzeichnet, daß** der Exzenter (13) gegen eine Feder-Vorspannung motorisch drehbeweglich antreibbar ist und
- bei Ausfall eines Servomotors (16,16') bei unterbrochener Antriebsverbindung der Reibpartner (8 und 9) das schwenkarmgeführte Reibrad (8) über den Exzenter (13) mittels der Feder-Vorspannung in Eingriff mit Riemen (5) und Antriebsrad (9) gesteuert ist, <>
- dass ein an einem Sockel (17) der Steuereinrichtung (10) zu dieser achsparallel oder querab angeordneter Servomotor (16,16') über ein in beide Drehrichtungen ohne Selbsthemmung drehbares Zahnradgetriebe (19,22) mit dem Exzenter (13) in Antriebsverbindung steht, wobei
- der Servomotor (16,16') mit dem Zahnradgetriebe (19,22) unter Zwischenschaltung einer in Antriebsrichtung drehfest sperrenden Freilaufeinrichtung (20) in Antriebsverbindung steht.

2. Reibradgetriebe nach Anspruch 1, **dadurch gekennzeichnet,**
- **dass** als Zahnradgetriebe (19) ein Schneckengetriebe (22) mit einer mehrgängigen , nicht selbsthemmenden Schnecke (22') oder ein einfach oder mehrfach untersetzendes Stirnradgetriebe oder ein Winkelgetriebe vorgesehen ist.

3. Reibradgetriebe nach Anspruch 1 und 2, **dadurch gekennzeichnet,**
- **dass** ein elektrischer Servomotor (16) oder ein hydraulischer oder pneumatischer Servomotor (16') vorgesehen ist.

4. Reibradgetriebe nach Anspruch 3, **dadurch gekennzeichnet,**
- **dass** der elektrische Servomotor (16) ein Schrittschaltmotor ist.

5. Reibradgetriebe nach den Ansprüchen 1-4, **dadurch gekennzeichnet,**
- **dass** der über ein Auge (12) auf dem maschinenseitig drehbeweglich angeordneten Exzenter (13) gelagerte Schwenkarm (11) mittels einer umfangsseitig zwischen Auge (12) und Exzenter (13) angeordneten Schraubendrehfeder (14) das Reibrad (8) gegen die Riemen-Außenseite (7) andrückend beaufschlagt ist, wobei
- die Schraubendrehfeder (14) ferner derart bemessen ist, dass
- bei Ausfall des Servomotors (16,16') bei unterbrochen gesteuerter Antriebsverbindung von Reibrad (8) und Antriebsrad (9) und vom Servomotor (16,16') entkuppeltem, frei drehbarem Zahnradgetriebe (19) das Reibrad (8) über den Schwenkarm (11) mittels des federangetriebenen Exzenters (13) in Eingriffsposition mit dem Antriebsrad (9) gezogen angeordnet ist.

6. Reibradgetriebe nach Anspruch 5, **dadurch gekennzeichnet,**
- **dass** der Exzenter (13) auf einer maschinenseitig drehfixiert angeordneten Lagerbüchse (15) mit stirnseitig am Sockel (17) aufliegenden Boden (15') drehbeweglich gelagert ist, wobei
- in der Lagerbüchse (15) koaxial zu einem diese durchsetzenden Haltebolzen (23) der Steuereinrichtung (10) eine weitere Schraubendrehfeder (24) angeordnet ist, wobei
- die parallel geschaltet angeordneten beiden Schraubendrehfedern (14,24) auf den Exzenter (13) gleichgerichtet einwirkend angeordnet sind.

7. Reibradgetriebe nach den Ansprüchen 1-6, **dadurch gekennzeichnet,**
- **dass** am Exzenter (13) sockelseitig ein in eine Ringnut (25) des Sockels (17) vorspringend angeordneter Schneckenradkranz (22") vorgesehen ist, der
- mit einer mehrgängigen Schnecke (22') zusammenwirkt, die
- unter Zwischenschaltung der Freilaufeinrichtung (20) mit einem querab am Sockel (17) angeflanscht angeordneten Schrittschaltmotor (16) in Antriebsverbindung steht.

8. Reibradgetriebe nach den Ansprüchen 1-6, **dadurch gekennzeichnet,**
- **dass** der Exzenter sockelseitig mit einem Zahnrad ausgerüstet ist, das
- mit einem Ritzel eines Stirnrad- oder Winkel-Getriebes zusammenwirkt,
- wobei das Ritzel unter Zwischenschaltung einer Freilaufeinrichtung mit einem zur Exzenter-Drehachse parallel am Sockel angeordneten Servomotor (16,16') in Antriebsverbindung steht.

9. Reibradgetriebe nach einem der Ansprüche 1-8, **dadurch gekennzeichnet,**
- **dass** das Nebenaggregat (4) eine Kühlmittelpumpe der Brennkraftmaschine (2) ist, und
- das Reibrad (8) bedarfsweise vom Antriebsrad (9) der Kühlmittelpumpe (4) signalgesteuert getrennt ist durch einen Parameter der Brennkraftmaschine (2) oder mittels eines in einem elektronischen Steuergerät abgelegten Kennfeldes, wobei
- das Reibrad (8) außer Eingriff gehalten ist mittels eines bestromten Schrittschaltmotors (16) oder mittels eines gegen einen Drehanschlag wirkenden hydraulischen oder pneumatischen Servomotors (16').

## Claims

1. A friction gear for a sub-unit disposed separately from a unit or belt drive of an internal combustion engine,
- the friction gear comprising a drive wheel (9) of the sub-unit (4) and a controllable friction wheel (8) in frictional drive connection with the outside (7) of the belt (5) and with the drive wheel (9), and the friction wheel (8) is guided by a swivel arm (11) mounted on an eccentric (13) of a control device (10) disposed on the engine, **characterised in that**
- the eccentric (13) is drivable in rotation by a motor against spring bias and
- in the event of a failure of a servomotor (16, 16') when the drive connection between the frictional components (8 and 9) is broken, the friction wheel (8) guided by the swivel arm is controlled in engagement with the belt (5) and drive wheel (9) by spring bias via the eccentric (13),
- a servomotor (16, 16') disposed on a socket (17) of the control device (10) axially parallel with or transversely thereof is in drive connection with the eccentric (13) via a toothed gear (19, 22) rotatable in both directions without automatic locking, wherein
- the servomotor (16, 16') is in drive connection with the toothed drive (19, 22) with interposition of a freewheel device (20) which co-rotatably locks in the drive connection.

2. A friction gear according to claim 1, **characterised in that**
- the toothed gear (19) is a worm gear (22) with a multi-thread, not automatically locking worm (22') or is a single or multiple step-down spur gear or an angular gear.

3. A friction gear according to claim 1 and claim 2, **characterised in that**
- an electric servomotor (16) or a hydraulic or pneumatic servomotor (16') is provided.

4. A friction gear according to claim 3, **characterised in that**
- the electric servomotor (16) is a stepping motor.

5. A friction gear according to claims 1 - 4, **characterised in that**
- the swivel arm (11), mounted via an eyelet (12) on the eccentric rotatable on the engine side presses the friction wheel (8) against the outside (7) of the belt via a helical torsion spring (14) disposed on the periphery between the eyelet (12) and the eccentric (13), wherein
- the helical torsion spring (14) is dimensioned so that
- if the servomotor (16, 16') fails and the controlled drive connection between the friction wheel (8) and drive wheel (9) is broken and the friction gear (19) is freely rotatable and uncoupled from the servomotor (16, 16'), the friction wheel (8) is pulled into the engaged position with the drive wheel (9) by the swivel arm (11) via the spring-driven eccentric (13).

6. A friction gear according to claim 5, **characterised in that**
- the eccentric (13) is rotatably mounted on a bearing bush (15) fixed in rotation on the engine side and with its base (15') resting with its end on the socket (17), wherein
- an additional helical torsion spring (24) is disposed in the bearing bush (15) coaxial with a securing bolt (23) of the control device (10) extending through it, wherein
- the two helical torsion springs (14, 24) connected in parallel are disposed so as to act on the eccentric (13) in the same direction.

7. A friction gear according to claims 1 - 6, **characterised in that**
- a worm wheel rim (22') projecting into an annular groove (25) in the socket (17) is provided on the eccentric (13) on the socket side and
- co-operates with a multiple-thread worm (22'), which
- is in drive connection, with interposition of the freewheel device (20), with a stepping motor (16) flange-mounted transversely on the socket (17).

8. A friction gear according to claims 1 - 6, **characterised in that**
- on the socket side the eccentric is equipped with a gearwheel, which
- co-operates with a pinion of a spur gear or angular gear,
- wherein the pinion is in drive connection, with interposition of a freewheel device, with a servomotor (16, 16') disposed on the socket parallel with the axis of rotation of the eccentric.

9. A friction drive according to any of claims 1 - 8, **characterised in that**
- the sub-unit (4) is a coolant pump of the internal combustion engine (2), and
- when necessary the friction wheel (8), under the control of a signal, is cut off from the drive wheel (9) of the coolant pump (4) by a parameter of the engine (2) or by means of a performance graph deposited in an electronic control unit, wherein
- the friction wheel (8) is held out of engagement by an energised stepping motor (16) or by a hydraulic or pneumatic servomotor (16') acting against a rotation stop.

## Revendications

1. Engrenage par friction pour un groupe auxiliaire séparé d'une transmission à courroie de groupes, comprenant une roue d'entraînement (9) du groupe auxiliaire (4) et une roue de friction (8) pouvant être commandée pour former une liaison d'entraînement par adhérence avec la face extérieure (7) de la courroie (5) et la roue d'entraînement (9), et la roue de friction (8) est guidée au moyen d'un bras pivotant (11) logé sur un excentrique (13) d'un dispositif de commande (10) disposé côté machine,
**caractérisé en ce que**
- l'excentrique (13) peut être entraîné en rotation par un moteur à l'encontre d'une précontrainte de ressort,
- lors d'une défaillance d'un servomoteur (16, 16'), la liaison d'entraînement des partenaires de friction (8 et 9) étant coupée, la roue de friction (8) guidée par le bras pivotant est commandée par l'excentrique (13) au moyen de la précontrainte de ressort en prise avec la courroie (5) et la roue d'entraînement (9),
- un servomoteur (16, 16') disposé sur un socle (17) du dispositif de commande (10) parallèlement à l'axe de celui-ci ou transversalement est en liaison d'entraînement avec l'excentrique (13) par l'intermédiaire d'un engrenage (19, 22) rotatif dans les deux sens de rotation sans blocage automatique,
- le servomoteur (16, 16') est en liaison d'entraînement avec l'engrenage (19, 22) par l'intermédiaire d'un dispositif de roue libre (20) bloqué en rotation dans le sens d'entraînement.

2. Engrenage par friction selon la revendication 1,
**caractérisé en ce que**
l'engrenage (19) est un engrenage à vis sans fin (22) avec une vis (22') à filetage multiple sans blocage automatique ou un engrenage droit à démultiplication simple ou multiple ou un engrenage angulaire.

3. Engrenage par friction selon les revendications 1 et 2,
**caractérisé en ce qu'**
on prévoit un servomoteur (16) électrique ou un servomoteur (16') hydraulique ou pneumatique.

4. Engrenage par friction selon la revendication 3,
**caractérisé en ce que**
le servomoteur (16) électrique est un moteur pas à pas.

5. Engrenage par friction selon les revendications 1 à 4,
**caractérisé en ce que**
- le bras pivotant (11) logé au moyen d'un oeillet (12) sur l'excentrique (13) disposé en rotation côté machine est sollicité au moyen d'un ressort hélicoïdal (14) disposé côté périphérie entre l'oeillet (12) et l'excentrique (13) pour appliquer la roue de friction (8) contre la face extérieure de courroie (7),
- le ressort hélicoïdal (14) étant en outre dimensionné de telle sorte que lors d'une défaillance du servomoteur (16, 16') pendant une liaison d'entraînement interrompue de la roue de friction (8) et de la roue d'entraînement (9) et si l'engrenage (19) rotatif librement est découplé du servomoteur (16, 16'), la roue de friction (8) est amenée en position de prise avec la roue d'entraînement (9) par le bras pivotant (11) au moyen de l'excentrique (13) entraîné par ressort.

6. Engrenage par friction selon la revendication 5,
**caractérisé en ce que**
- l'excentrique (13) est logé mobile en rotation sur un coussinet (15) disposé côté machine immobile en rotation avec un fond (15') reposant côté frontal sur le socle (17),
- dans le coussinet (15) un autre ressort hélicoïdal (24) est disposé coaxialement à un boulon de retenue (23) du dispositif de commande (10) traversant le coussinet,
- les deux ressorts hélicoïdaux (14, 24) mis en parallèle sont disposés pour agir dans le même sens sur l'excentrique (13).

7. Engrenage par friction selon les revendications 1 à 6,
**caractérisé en ce que**
sur l'excentrique (13), côté socle, une vis sans fin (22") fait saillie dans une rainure annulaire (25) du socle (17) et coopère avec une vis sans fin à filetage multiple (22'), qui est en liaison d'entraînement avec le moteur pas à pas (16) bridé transversalement au socle (17).

8. Engrenage par friction selon les revendications 1 à 6,
**caractérisé en ce que**
côté socle l'excentrique est muni d'une roue dentée qui coopère avec le pignon d'un engrenage droit ou angulaire, le pignon étant en liaison d'entraînement avec le servomoteur (16, 16') disposé sur le socle parallèlement à l'axe de rotation de l'excentrique par l'intermédiaire d'un dispositif de roue libre.

9. Engrenage par friction selon l'une quelconque des revendications 1 à 8,
**caractérisé en ce que**
- le groupe auxiliaire (4) est une pompe à réfrigérant du moteur à combustion interne (2),
- la roue de friction (8) est, si nécessaire, séparée de la roue d'entraînement (9) de la pompe à réfrigérant (4), grâce à une commande par signal, par un paramètre du moteur à combustion interne (2) ou au moyen d'un champ caractéristique enregistré dans un appareil de commande électronique, et
- la roue de friction (8) est maintenue hors prise au moyen d'un moteur pas à pas (16) alimenté en courant ou au moyen d'un servomoteur (16') hydraulique ou pneumatique agissant contre une butée de rotation.
